# EUROPEAN PATENT APPLICATION

(11) **EP 4 796 970 A1**
(43) Date of publication of application: **26.08.2026**
(21) Application number: 24905576.5
(22) Date of filing: 12.08.2024
(51) Int. Cl.: G02B 6/44

(54) **ENVIRONMENTALLY FRIENDLY EASILY STRIPPABLE ARMORED OPTICAL CABLE AND PREPARATION METHOD THEREFOR**

(30) Priority: 22.12.2023 CN 202311784489
(71) Applicant: Yangtze Optical Fibre and Cable Joint Stock Limited Company, Wuhan, Hubei 430074 (CN)
(72) Inventor: RUAN, Yunfang, Wuhan, Hubei 430074 (CN); DUAN, Wentao, Wuhan, Hubei 430074 (CN); ZHANG, Mengjun, Wuhan, Hubei 430074 (CN); HU, Haifeng, Wuhan, Hubei 430074 (CN); TANG, Siyi, Wuhan, Hubei 430074 (CN); ZHAN, Hao, Wuhan, Hubei 430074 (CN); XIAO, Yi, Wuhan, Hubei 430074 (CN); WANG, Jia, Wuhan, Hubei 430074 (CN); XIONG, Zhuang, Wuhan, Hubei 430074 (CN); QI, Lin, Wuhan, Hubei 430074 (CN); YANG, Xiangrong, Wuhan, Hubei 430074 (CN)
(74) Representative: Lorenz Seidler Gossel Part. mbB
(86) International application number: PCT/CN2024/111477
(87) International publication number: WO 2025/130081

(57) **Abstract**

The present invention discloses an environmentally-friendly easy-to-strip armored optical cable and a fabrication method therefor, and belongs to the technical field of optical cable design and manufacturing. The environmentally-friendly easy-to-strip armored optical cable includes a cable core, and an inner sheath, an armor layer and an outer sheath that are sequentially provided on the periphery of the cable core. By respectively providing easy-to-tear portions on the inner sheath, the armor layer and the outer sheath, when the optical cable is stripped, the inner and outer sheaths and the armor layer can be stripped by hand without tools to extract the cable core, thereby improving the stripping efficiency of the optical cable and reducing the construction difficulty. The environmentally-friendly easy-to-strip armored optical cable and the fabrication method therefor according to the present invention have a simple structure and an ingenious design, achieve the easy stripping effect of the optical cable, optimize the usage performance and recycling performance of the optical cable, and have good application prospects and promotion values.

## Description

### Field of the Invention

The present invention belongs to the field of optical cable design and manufacturing, and particularly relates to an environmentally-friendly easy-to-strip armored optical cable and a fabrication method therefor.

### Background of the Invention

With the continuous in-depth development of optical fiber communication, the use of optical cables is becoming more and more popular, and the workload of optical cable laying is also increasing. However, against the background of high labor costs in foreign markets and continuously rising labor costs in the domestic market, the demand for easy mid-span access and easy stripping performance of the optical cables has significantly increased to improve the construction experience and efficiency of construction personnel. Additionally, with the gradual deepening of the concept of low carbon and environmental protection, it is necessary to consider the energy consumption for disposal after product replacement or natural obsolescence at a product design stage.

In the prior art, to achieve an easy-to-strip effect of the optical cables, improvements are generally made to an armor layer and a sheath.

To achieve an easy-to-strip effect of the armor layer, generally, at a steel tape longitudinal covering stage, two steel tapes are directly used to complete longitudinal covering, and the armor formed after longitudinal covering has two laps, and is directly separated at the two laps during construction. However, during the longitudinal covering production process, it is necessary to correspondingly provide two sets of steel tape pay-off devices and two steel tape longitudinal covering films, and the forming table design is complex. Moreover, during the production process, it is necessary to ensure a sufficient lap width at the two laps, which requires high production precision. Additionally, to prevent the two steel tapes from coming apart before subsequent extrusion, it is also necessary to apply glue to the laps, which adds an extra production step and reduces the production efficiency and cost-effectiveness.

To achieve an easy-to-strip effect of the sheath, there are generally two methods. (1) Embedding foreign matter in a sheath. Specifically, during the sheath extrusion process, foreign matter such as a filler cord is embedded into the sheath, and during construction, the function of easily stripping the sheath is achieved by removing the filler cord. However, this method requires two additional sets of filler cord pay-off equipment during the production process and requires a special die core to position the filler cord in the middle of the sheath, thus requiring high tension control for the pay-off equipment. Moreover, the bending performance of the optical cable produced by using this method is reduced sharply at the filler cord. (2) Providing longitudinal grooves or longitudinal protrusions on the sheath. Specifically, by providing the longitudinal grooves or protrusions on the surface of the sheath, stress concentration occurs along the grooves or the protrusions during stripping, thereby achieving an easy tearing and stripping effect. However, this method essentially only causes a local stress concentration phenomenon longitudinally, while the sheath stripping strength is not reduced. If the wall thickness is greater than 0.5 mm, it is almost impossible to complete stripping by hand alone, and this method does not achieve truly easy stripping in practical use.

### Summary of the Invention

In view of one or more of the above defects or improvement needs in the prior art, the present invention provides an environmentally-friendly easy-to-strip armored optical cable and a fabrication method therefor, which can achieve the effect of easy stripping of the entire optical cable without a rip cord, thereby facilitating construction and recycling of the optical cable.

To achieve the above objective, according to one aspect of the present invention, an environmentally-friendly easy-to-strip armored optical cable is provided. The environmentally-friendly easy-to-strip armored optical cable includes a cable core, an inner sheath, an armor layer and an outer sheath that are sequentially provided from inside to outside;
the inner sheath is provided with at least one first easy-to-tear portion extending through inner and outer surfaces of the inner sheath and extending continuously in a longitudinal direction;
the armor layer is provided with at least one second easy-to-tear portion extending in the longitudinal direction; and
the outer sheath is provided with at least one third easy-to-tear portion extending through the inner and outer surfaces of the outer sheath and extending continuously in the longitudinal direction.

As a further improvement of the present invention, at least one first easy-to-tear portion, at least one second easy-to-tear portion and at least one third easy-to-tear portion overlap in the radial direction.

As a further improvement of the present invention, a cross-sectional width of each of the first easy-to-tear portion and the third easy-to-tear portion is greater than 0.1 mm and less than 1/6 of a corresponding circumference.

As a further improvement of the present invention, a cross-sectional width of a side of the third easy-to-tear portion close to the armor layer is greater than 3 mm.

As a further improvement of the present invention, the first easy-to-tear portion and the third easy-to-tear portion are made of a same material, and the material includes, in parts by weight:
55-85 parts of low-density polyethylene, 10-20 parts of high-density polyethylene, 3-20 parts of cyclic polyolefin, 0.1-0.5 parts of an antioxidant, 0.1-0.5 parts of a light stabilizer, and 2-4 parts of a color masterbatch.

As a further improvement of the present invention, the first easy-to-tear portion and/or the third easy-to-tear portion has an Elmendorf transverse tear strength higher than 100 g and a longitudinal tear strength lower than 30 g.

As a further improvement of the present invention, a difference in longitudinal tear strength between the second easy-to-tear portion and other parts of the armor layer is greater than 5%;
and/or,
a difference in longitudinal tear strength between the first easy-to-tear portion and other parts of the inner sheath, and a difference in longitudinal tear strength between the third easy-to-tear portion and other parts of the outer sheath are greater than 5%.

As a further improvement of the present invention, the second easy-to-tear portion is a notch extending longitudinally along the armor layer;
the notch extends continuously in the longitudinal direction, and a depth of the notch is less than a thickness of the armor layer; or the notch extends discontinuously in the longitudinal direction to form a discontinuous notch.

As a further improvement of the present invention, an adhesion force between the armor layer and the outer sheath is less than 0.5 N/mm.

As a further improvement of the present invention, an anti-untwisting thin layer is further provided between the cable core and the inner sheath, and a material of the anti-untwisting thin layer is the same as a main material of the inner sheath.

According to another aspect of the present invention, provided is a fabrication method for an environmentally-friendly easy-to-strip armored optical cable. The fabrication method includes the following steps:
(1) fabricating a cable core;
(2) co-extruding an easy-to-tear material and a main material of an inner sheath through a die to form an inner sheath and form a first easy-to-tear portion on the inner sheath;
(3) performing a local weakening treatment on a metal steel tape in a longitudinal direction thereof to form a second easy-to-tear portion on the metal steel tape, and longitudinally covering a periphery of the inner sheath with the treated metal steel tape to form an armor layer; and
(4) co-extruding an easy-to-tear material and a main material of an outer sheath through the die to form an outer sheath and form a third easy-to-tear portion on the outer sheath.

As a further improvement of the present invention, in step (2) and step (4), the die includes a die cover and a die core;
the die core is provided in the center of the die and extends continuously in the longitudinal direction to serve as a feeding channel of the cable core;
the die cover is provided with a main sheath material extrusion channel and an easy-to-tear material extrusion channel.
the main sheath material extrusion channel is provided annularly and is coaxial with the die core; and
the easy-to-tear material extrusion channel is in communication with the main sheath material extrusion channel near an outlet of the main sheath material extrusion channel.

The above improved technical features may be combined with each other as long as they do not constitute a conflict with each other.

In general, compared with the prior art, the above technical solutions conceived by the present invention have the following beneficial effects.
(1) In the environmentally-friendly easy-to-strip armored optical cable according to the present invention, by respectively providing the easy-to-tear portions on the inner sheath, the armor layer and the outer sheath, when the optical cable is stripped, the inner and outer sheaths and the armor layer can be stripped by hand without tools to extract the cable core, thereby improving the stripping efficiency of the optical cable and reducing the construction difficulty.
(2) In the environmentally-friendly easy-to-strip armored optical cable according to the present invention, by configuring the first easy-to-tear portion, the second easy-to-tear portion and the third easy-to-tear portion to overlap in the radial direction of the optical cable to locate on the same straight line, the inner and outer sheaths and the armor layer can be stripped simultaneously during construction, thereby further increasing the stripping speed of construction personnel.
(3) In the fabrication method for the environmentally-friendly easy-to-strip armored optical cable according to the present invention, by co-extruding the easy-to-tear materials and the main materials of the sheaths through the dies, the adhesion between the easy-to-tear portion materials and the sheath materials is ensured.
(4) The environmentally-friendly easy-to-strip armored optical cable and the fabrication method therefor according to the present invention have a simple structure and an ingenious design, achieve the easy stripping effect of the optical cable, optimize the usage performance and recycling performance of the optical cable, and have good application prospects and promotion values.

### Brief Description of the Drawings

To describe the technical solutions of the embodiments of the present invention more clearly, the accompanying drawings required for the embodiments are briefly described below. Apparently, the accompanying drawings in the following description show only some embodiments of the present invention, and a person skilled in the art may still derive other drawings from these accompanying drawings without creative efforts.
Fig. 1 is a schematic structural diagram of an environmentally-friendly easy-to-strip armored optical cable in an embodiment of the present invention;
Fig. 2 is a partially enlarged schematic structural diagram of part A of an environmentally-friendly easy-to-strip armored optical cable in an embodiment of the present invention; and
Fig. 3 is a schematic cross-sectional view of a die for fabricating an environmentally-friendly easy-to-strip armored optical cable in an embodiment of the present invention.

In all the accompanying drawings, the same reference numerals are used to represent identical technical features, specifically: 1-optical unit; 2-central reinforcing member; 3-anti-untwisting thin layer; 4-inner sheath; 5-armor layer; 6-outer sheath; 7-first easy-to-tear portion; 8-second easy-to-tear portion; 9-third easy-to-tear portion; 10-die cover; 11-die core; 12-easy-to-tear material extrusion channel; 13-main sheath material extrusion channel; and 14-cable core passage direction.

### Detailed Description of the Embodiments

In order to make the objectives, technical solutions and advantages of the present invention clearer, the present invention will be further described with reference to accompanying drawings and embodiments. It should be understood that the specific embodiments described herein are intended only to explain the present invention rather than to limit the present invention. In addition, the technical features involved in various implementations of the present invention described below may be combined with each other as long as they do not constitute a conflict with each other.

In the description of the present invention, it should be understood that terms such as "central", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", and "circumferential" indicate orientations or positional relationships based on those shown in the accompanying drawings, which are merely for convenience of describing the present invention and for simplifying the description, rather than indicating or implying that the referred device or element must have a specific orientation or be constructed and operated in a specific orientation. Therefore, such terms should not be construed as limiting the present invention.

In addition, the terms "first" and "second" are only used for descriptive purposes, and should not be construed as indicating or implying relative importance or implicitly indicating the number of technical features as indicated. Thus, the feature defined with "first" or "second" may explicitly or implicitly indicate that at least one such feature is included. In the description of the present invention, the term "multiple" refers to at least two, such as two, or three, unless otherwise defined explicitly.

In the present invention, unless otherwise expressly specified or defined, terms such as "mounted", "connected to", "connected", and "fixed" should be interpreted broadly. These terms can refer to fixed or detachable connections, integral connections, mechanical or electrical connections, direct connections, indirect connections via an intermediary, internal communication between two elements, or an interactive relationship between two elements, unless otherwise defined explicitly. For those of ordinary skill in the art, the specific meanings of the above terms in the present invention can be understood based on the context of their application.

In the present invention, a first feature being in an "upper" or "lower" position relative to a second feature may indicate that the first and second features are either in direct contact or in indirect contact via an intermediary, unless otherwise expressly specified or defined. Moreover, a first feature being described as "above", "over", or "on top of" a second feature may indicate that the first feature is directly above, diagonally above, or simply positioned at a higher horizontal level than the second feature. The first feature being described as "below", "under", or "beneath" the second feature may indicate that the first feature is directly below, diagonally below, or simply positioned at a lower horizontal level than the second feature.

### Embodiment:

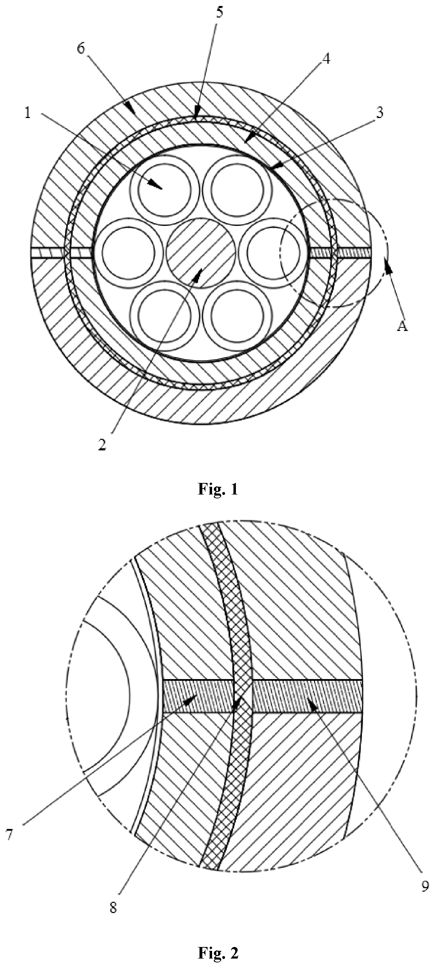

Referring to Fig. 1 to Fig. 3, an environmentally-friendly easy-to-strip armored optical cable in a preferred embodiment of the present invention includes a cable core, an inner sheath 4, an armor layer 5 and an outer sheath 6. The armor layer 5 is provided between the inner sheath 4 and the outer sheath 6 to improve the compression resistance of a sheath and provide sufficient strength for the cable core.

Specifically, the cable core is formed by stranding a plurality of optical units 1. The optical unit 1 is composed of an optical fiber, a water blocking material covering the optical fiber, and a loose tube sleeved on an outermost layer, wherein the loose tube is made of a material with certain elasticity, such as a thermoplastic polyester elastomer, to protect the optical fiber inside the loose tube. Furthermore, a central reinforcing member 2 is provided in the cable core to improve the strength of the cable core itself, and an anti-untwisting thin layer 3 is provided on the periphery of the cable core to bind the optical units 1 in a cabling process and prevent the stranded optical units 1 from untwisting.

Preferably, the anti-untwisting thin layer 3 is typically a binding yarn, a polyester tape, a film wrapping tape, an extruded thin layer, and the like. Further preferably, the material of the anti-untwisting thin layer 3 is of the same category as a sheath material, so as to facilitate subsequent recycling together with the sheath material by melting, thereby reducing impurities in a recycled material.

Further, the inner sheath 4, the armor layer 5 and the outer sheath 6 sequentially provided outside the cable core are used to further protect the optical cable and to provide mechanical properties such as tensile resistance, compression resistance and bending resistance for the optical cable, thereby facilitating optical cable transportation and laying. Furthermore, to facilitate the stripping of the optical cable during the construction process, in the present invention, at least one first easy-to-tear portion 7 is provided on the inner sheath 4, at least one second easy-to-tear portion 8 is provided on the armor layer 5, and at least one third easy-to-tear portion 9 is provided on the outer sheath 6, as shown in Fig. 1. Therefore, the entire optical cable requires no rip cord, and after a starting cut is made by using a tool, the inner and outer sheaths and the armor layer 5 can be separated and stripped by hand to extract the cable core, achieving the effect of easy stripping of the entire optical cable without a rip cord.

Specifically, the first easy-to-tear portion 7 penetrates inner and outer surfaces of the inner sheath 4 in the radial direction and extends continuously in a longitudinal direction. During practical production, a material of the first easy-to-tear portion and a main material of an inner sheath may be co-extruded through a die to form the inner sheath 4 with the first easy-to-tear portion 7.

Correspondingly, the third easy-to-tear portion 9 penetrates inner and outer surfaces of the outer sheath 6 in the radial direction and extends continuously in a longitudinal direction. During practical production, a material of the third easy-to-tear portion and a main material of an outer sheath are co-extruded through a die to form the outer sheath 6 with the third easy-to-tear portion 9.

Preferably, a cross-sectional width of each of the first easy-to-tear portion 7 and the third easy-to-tear portion 9 is set to be greater than 0.1 mm and less than 1/6 of a circumference of the corresponding sheath.

Preferably, the first easy-to-tear portion and the third easy-to-tear portion are made of a same material, which includes, in parts by weight: 55-85 parts of low-density polyethylene, 10-20 parts of high-density polyethylene, 3-20 parts of cyclic polyolefin, 0.1-0.5 parts of an antioxidant, and 0.1-0.5 parts of a light stabilizer.

Preferably, the material of the first easy-to-tear portion and the third easy-to-tear portion further includes 2-4 parts of a color masterbatch to color the easy-to-tear portions, forming easy-to-tear colored ribbons on the inner sheath 4 and the outer sheath 6, thereby facilitating quick recognition operation of construction personnel.

The content of the cyclic polyolefin determines the tear force and tear direction, such that there is a significant difference between Elmendorf transverse and longitudinal tear strengths of the easy-to-tear portions. Preferably, the first easy-to-tear portion 7 and/or the third easy-to-tear portion 9 has a transverse tear strength set to be higher than 100 g and a longitudinal tear strength lower than 30 g, such that the first easy-to-tear portion 7 and/or the third easy-to-tear portion 9 has the characteristic of being easy to separate longitudinally but difficult to separate transversely.

Preferably, a difference in longitudinal tear strength between the first easy-to-tear portion 7 and other parts of the inner sheath 4, and/or a difference in longitudinal tear strength between the third easy-to-tear portion 9 and other parts of the outer sheath 6 is greater than 5%. Therefore, when the optical cable is subjected to a tear force perpendicular to the longitudinal direction of the optical cable, a strength difference is generated at the boundary between the easy-to-tear portion and the main material part of the sheath, causing the optical cable to rupture along the easy-to-tear portion.

Further, the armor layer 5 is generally formed by longitudinally covering the periphery of the inner sheath 4 with a steel tape, with longitudinal covering laps formed at two edges of the steel tape. In the present invention, before longitudinal covering, local weakening treatment is performed on the steel tape in a longitudinal direction thereof. After treatment, longitudinal covering is completed to form the armor layer 5. The part subjected to local weakening treatment is formed as the second easy-to-tear portion 8 on the armor layer 5, so as to facilitate the stripping of the armor layer 5 and facilitate the separation between the armor layer 5 and the outer sheath 6.

Preferably, the second easy-to-tear portion 8 is a notch extending longitudinally along the armor layer 5, and is annularly spaced apart from the longitudinal covering laps. The notch may be a continuous notch having a depth less than the thickness of the armor layer 5 and extending continuously, or a discontinuous notch having a depth less than or equal to the thickness of the armor layer 5 and extending discontinuously, depending on production requirements and indexes, and the difference in longitudinal tear strength between the second easy-to-tear portion 8 and other parts of the armor layer 5 is set to be greater than 5%.

Preferably, at least one first easy-to-tear portion 7, at least one second easy-to-tear portion 8 and at least one third easy-to-tear portion 9 are configured to overlap in the radial direction so as to be located on the same straight line, as shown in Fig. 2, thereby allowing for simultaneous stripping of the inner sheath 4, the armor layer 5 and the outer sheath 6 during optical cable stripping. Certainly, the first easy-to-tear portion 7, the second easy-to-tear portion 8 and the third easy-to-tear portion 9 may also be configured not on the same straight line, thereby allowing for layered stripping of the optical cable during construction.

In the preferred embodiment shown in Fig. 1, two first easy-to-tear portions 7 are symmetrically provided on the inner sheath 4, and two third easy-to-tear portions 9 are symmetrically provided on the outer sheath 6. Furthermore, local weakening treatment is performed on the metal steel tape along the longitudinal center line, such that in the armor layer 5 formed by longitudinal covering, the second easy-to-tear portion 8 and steel tap laps are symmetrically distributed about the central axis of the optical cable. The first easy-to-tear portion 7, the second easy-to-tear portion 8 and the third easy-to-tear portion 9 on one side overlap in the radial direction, and correspondingly, the first easy-to-tear portion 7, the steel tap laps and the third easy-to-tear portion 9 on the other side also overlap in the radial direction, thereby allowing the inner and outer sheaths and the armor layer 5 to be simultaneously stripped in half to extract the cable core.

Preferably, the width of the side of the first easy-to-tear portion 7 close to the armor layer 5 and/or the side of the third easy-to-tear portion 9 close to the armor layer 5 is set to be greater than 3 mm to ensure an overlap between the second easy-to-tear portion 8 and the first easy-to-tear portion 7 as well as between the second easy-to-tear portion 8 and the third easy-to-tear portion 9, thereby avoiding an overlapping failure caused by deflecting of the metal steel tape during the longitudinal covering process due to an excessively small easy-to-tear portion width.

It may be understood that by respectively providing the easy-to-tear portions on the outer sheath 6, the armor layer 5 and the inner sheath 4, the present invention not only facilitates the stripping construction of the optical cable but also facilitates the separation between all structures of the optical cable, thereby easily meeting the requirement of collecting materials of all the structures in different categories during recycling treatment, and avoiding impurities and performance degradation caused by melting and secondary processing of the materials, which achieves lower carbon emissions and better environmental protection compared with existing structures and processing methods.

Additionally, since the outer sheath 6 is directly extruded on the periphery of the armor layer 5 during production, the armor layer 5 and the outer sheath 6 adhere tightly to each other. Preferably, an adhesion force between the outer sheath 6 and the armor layer 5 is less than 0.5 N/mm, such that the outer sheath 6 can be easily separated from the armor layer 5.

Further, in the present invention, the environmentally-friendly easy-to-strip armored optical cable is fabricated through the following method steps.
(1) Fabricate a cable core.

An optical fiber is sleeved into a flexible tube, and the tube is filled with a water blocking material, thereby forming an optical unit 1; and a plurality of optical units 1 are loosely stranded outside a central reinforcing member 2 to form a cable core, and preferably, a binding yarn, a polyester tape, a film wrapping tape, an extruded thin layer, and the like are provided on the periphery of the cable core to form an anti-untwisting thin layer 3 to bind the stranded optical units 1.

(2) Co-extrude an easy-to-tear material and a main material of an inner sheath through a die to form an inner sheath 4 and form a first easy-to-tear portion 7 on the inner sheath 4.

In the present invention, the inner sheath 4 and the first easy-to-tear portion 7 are fabricated by co-extrusion using the die.

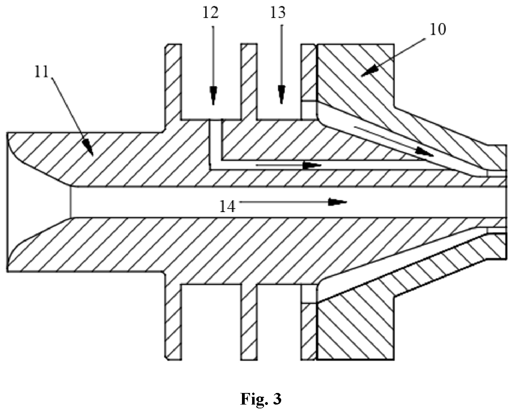

Specifically, as shown in Fig. 3, the die includes a die cover 10 and a die core 11, wherein the die core 11 is provided in the center of the die and extends continuously in a longitudinal direction to serve as a feeding channel of the cable core, as indicated by a cable core passage direction 14 shown in Fig. 3.

Furthermore, an easy-to-tear material extrusion channel 12 and a main sheath material extrusion channel 13 are further provided on the die cover 10, wherein the main sheath material extrusion channel 13 is provided on the periphery of the die core 11 in a spaced manner, is provided annularly and is coaxial with the die core 11, such that after the cable core is fed out through the die core 11, the main material of the inner sheath is extruded from an outlet of the main sheath material extrusion channel 13 and covers the periphery of the cable core.

Correspondingly, the easy-to-tear material extrusion channel 12 is in communication with the main sheath material extrusion channel 13 near the outlet of the main sheath material extrusion channel 13, such that an easy-to-tear material is extruded along with the main material of the inner sheath.

During practical production, the extrusion pressure of the easy-to-tear material is set to be greater than that of a main sheath material, such that after the easy-to-tear material enters the main sheath material extrusion channel 13 via the easy-to-tear extrusion channel 12, the main material of the inner sheath is diverted to both sides under the action of pressure, and to be extruded from the outlet of the main sheath material extrusion channel 13 to form a colored ribbon part, i.e., the first easy-to-tear portion 7.

During practical production, the width of the formed first easy-to-tear portion 7 may be controlled by controlling the extrusion pressure of the easy-to-tear material. It may be understood that the greater the extrusion pressure of the easy-to-tear material, the farther the main sheath material moves to both sides after the easy-to-tear material enters the main sheath material extrusion channel, thereby forming a wider first easy-to-tear portion 7.

(3) Perform local weakening treatment on a metal steel tape in a longitudinal direction thereof to form a second easy-to-tear portion 8 on the metal steel tape, and longitudinally cover a periphery of the inner sheath 4 with the treated metal steel tape to form an armor layer 5.

Before performing longitudinal covering with the metal steel tape to form the armor layer 5, local weakening treatment is performed on the metal steel tape in the longitudinal direction thereof to form a second easy-to-tear portion 8.

In the preferred embodiment, the second easy-to-tear portion 8 is a notch provided in a longitudinal direction of the armor layer 5, which may be made by using equipment such as a metal cutting blade or a laser cutting machine. The notch may be a continuously extending notch, and the depth of the notch is less than the thickness of the metal steel tape. Certainly, the notch may also be a discontinuous notch. In this case, the depth of the notch may be less than the thickness of the metal steel tape, or the metal steel tape may be directly cut through.

It may be understood that when the notch is a continuous notch, the longitudinal tear strength of the second easy-to-tear portion 8 may be adjusted by controlling the depth of the notch. The deeper the notch, the lower the longitudinal tear strength. When the notch is a discontinuous notch, the longitudinal tear strength of the second easy-to-tear portion 8 may be adjusted not only by controlling the depth of the notch, but also by controlling the length and density of a notch unit. The longer and denser the notch unit, the lower the longitudinal tear strength of the second easy-to-tear portion 8.

(4) Co-extrude an easy-to-tear material and a main material of an outer sheath through the die to form an outer sheath 6 and form a third easy-to-tear portion 9 on the outer sheath 6.

In the preferred embodiment, the outer sheath 6 and the third easy-to-tear portion 9 are also formed by co-extrusion, using the same die and operating method as in step (2). It is only necessary to replace the main material of the inner sheath with the main material of the outer sheath, and adjust corresponding setting parameters according to fabrication requirements of the outer sheath 6.

The environmentally-friendly easy-to-strip armored optical cable and the fabrication method therefor according to the present invention have a simple structure and an ingenious design, achieve the easy stripping effect of the optical cable, optimize the usage performance and recycling performance of the optical cable, and have good application prospects and promotion values.

It will be readily understood by a person skilled in the art that foregoing descriptions are merely preferred embodiments of the present invention, but are not intended to limit the present invention. Any modifications, equivalent replacements, improvements and the like made within the spirit and principle of the present invention shall fall within the protection scope of the present invention.

## Claims

1. An environmentally-friendly easy-to-strip armored optical cable, comprising a cable core, an inner sheath, an armor layer and an outer sheath that are sequentially provided from inside to outside; wherein
the inner sheath is provided with at least one first easy-to-tear portion extending through inner and outer surfaces of the inner sheath and extending continuously in a longitudinal direction;
the armor layer is provided with at least one second easy-to-tear portion extending in the longitudinal direction; and
the outer sheath is provided with at least one third easy-to-tear portion extending through the inner and outer surfaces of the outer sheath and extending continuously in the longitudinal direction.

2. The environmentally-friendly easy-to-strip armored optical cable according to claim 1, wherein at least one first easy-to-tear portion, at least one second easy-to-tear portion and at least one third easy-to-tear portion overlap in the radial direction.

3. The environmentally-friendly easy-to-strip armored optical cable according to claim 1, wherein a cross-sectional width of each of the first easy-to-tear portion and the third easy-to-tear portion is greater than 0.1 mm and less than 1/6 of a corresponding circumference.

4. The environmentally-friendly easy-to-strip armored optical cable according to claim 3, wherein a cross-sectional width of a side of the third easy-to-tear portion close to the armor layer is greater than 3 mm.

5. The environmentally-friendly easy-to-strip armored optical cable according to any one of claims 1-4, wherein the first easy-to-tear portion and the third easy-to-tear portion are made of a same material, and the material comprises, in parts by weight:
55-85 parts of low-density polyethylene, 10-20 parts of high-density polyethylene, 3-20 parts of cyclic polyolefin, 0.1-0.5 parts of an antioxidant, 0.1-0.5 parts of a light stabilizer, and 2-4 parts of a color masterbatch.

6. The environmentally-friendly easy-to-strip armored optical cable according to claim 5, wherein the first easy-to-tear portion and/or the third easy-to-tear portion has an Elmendorf transverse tear strength higher than 100 g and a longitudinal tear strength lower than 30 g.

7. The environmentally-friendly easy-to-strip armored optical cable according to claim 5, wherein a difference in longitudinal tear strength between the second easy-to-tear portion and other parts of the armor layer is greater than 5%;
and/or,
a difference in longitudinal tear strength between the first easy-to-tear portion and other parts of the inner sheath, and a difference in longitudinal tear strength between the third easy-to-tear portion and other parts of the outer sheath are greater than 5%.

8. The environmentally-friendly easy-to-strip armored optical cable according to any one of claims 1-4, 6 and 7, wherein the second easy-to-tear portion is a notch extending longitudinally along the armor layer;
the notch extends continuously in the longitudinal direction, and a depth of the notch is less than a thickness of the armor layer; or the notch extends discontinuously in the longitudinal direction to form a discontinuous notch.

9. The environmentally-friendly easy-to-strip armored optical cable according to claim 8, wherein an adhesion force between the armor layer and the outer sheath is less than 0.5 N/mm.

10. The environmentally-friendly easy-to-strip armored optical cable according to claim 1, wherein an anti-untwisting thin layer is further provided between the cable core and the inner sheath, and a material of the anti-untwisting thin layer is the same as a main material of the inner sheath.

11. A fabrication method for an environmentally-friendly easy-to-strip armored optical cable, comprising the following steps:
(1) fabricating a cable core;
(2) co-extruding an easy-to-tear material and a main material of an inner sheath through a die to form an inner sheath and form a first easy-to-tear portion on the inner sheath;
(3) performing a local weakening treatment on a metal steel tape in a longitudinal direction thereof to form a second easy-to-tear portion on the metal steel tape, and longitudinally covering a periphery of the inner sheath with the treated metal steel tape to form an armor layer; and
(4) co-extruding an easy-to-tear material and a main material of an outer sheath through the die to form an outer sheath and form a third easy-to-tear portion on the outer sheath.

12. The fabrication method for the environmentally-friendly easy-to-strip armored optical cable according to claim 11, wherein in step (2) and step (4), the die comprises a die cover and a die core;
the die core is provided in the center of the die and extends continuously in the longitudinal direction to serve as a feeding channel of the cable core;
the die cover is provided with a main sheath material extrusion channel and an easy-to-tear material extrusion channel;
the main sheath material extrusion channel is provided annularly and is coaxial with the die core; and
the easy-to-tear material extrusion channel is in communication with the main sheath material extrusion channel near an outlet of the main sheath material extrusion channel.
